# EUROPÄISCHE PATENTANMELDUNG

(11) **EP 0 995 726 A1**
(43) Veröffentlichungstag der Anmeldung: **26.04.2000**
(21) Anmeldenummer: 98119815.3
(22) Anmeldetag: 19.10.1998
(51) Int. Cl.: C04B 7/52, C04B 7/21, B01F 5/24, C04B 7/38

(54) **Verfahren und Vorrichtung zum Herstellen eines hydraulischen Bindemittels**

(71) Anmelder: E. Schwenk Zementwerke KG, 97753 Karlstadt (DE)
(72) Erfinder: Trenkwalder, Johann Dipl.-HTL-Ing., 97753 Karlstadt (DE); Ludwig, Horst-Michael Dr.-Ing., 97753 Karlstadt (DE); Brandt, Bernd Dipl.-Ing., 97776 Eussenheim (DE); Rüge, Armin, 97776 Eussenheim (DE)
(74) Vertreter: Patentanwälte Leinweber & Zimmermann

(57) **Zusammenfassung**

Bei einem Verfahren zum Herstellen eines aus einer Mehrzahl von zerkleinerten Einzelkomponenten zusammengesetzten, hydraulischen Bindemittels, bei dem eine Anzahl der Einzelkomponenten in einer gemeinsamen Mahleinrichtung zerkleinert und danach mit mindestens einer weiteren, getrennt davon zerkleinerten Einzelkomponente zusammengeführt wird, wird vorgeschlagen, daß die Zusammenführung unmittelbar nach der Zerkleinerung der Anzahl der Einzelkomponenten ohne vorherige Zwischenlagerung dieser zerkleinerten Einzelkomponenten zu bewirken.

## Beschreibung

Die Erfindung betrifft ein Verfahren zum Herstellen eines aus einer Mehrzahl von zerkleinerten Einzelkomponenten zusammengesetzten, hydraulischen Bindemittels, bei dem eine Anzahl der Einzelkomponenten in einer gemeinsamen Mahleinrichtung zerkleinert und danach mit mindestens einer weiteren, getrennt davon zerkleinerten Einzelkomponente zusammengeführt wird, eine Vorrichtung zur Ausführung derartiger Verfahren sowie eine Mischanlage für eine derartige Vorrichtung.

Bei der Herstellung von hydraulischen Bindemitteln, insbesondere Zementen, werden üblicherweise eine Vielzahl von Einzelkomponenten eingesetzt. Dazu gehören insbesondere durch Brennen von Rohstoffen, wie etwa Kalkstein, Ton, Kalkmergel, Tonmergel usw., hergestellte Zementklinker, Erstarrungsverzögerer, wie etwa Gips, Erstarrungsbeschleuniger sowie weitere Zusatzstoffe und Zusatzmittel. Zum Erhalt eines hydraulischen Bindemittels mit vorgegebenen Eigenschaften, wie etwa einer vorgegebenen Erstarrungsgeschwindigkeit und einer vorgegebenen Festigkeit, müssen diese Einzelkomponenten auf vorgegebene Korngrößen zerkleinert und vermischt werden. Dabei muß insbesondere bei einer Massenproduktion sichergestellt werden, daß aus den zerkleinerten Einzelkomponenten ein homogenes Gemisch mit gleichbleibendem Mischungsverhältnis hergestellt wird. Dazu werden die zur Herstellung des hydraulischen Bindemittels vorgesehenen Einzelkomponenten üblicherweise in einer gemeinsamen Mahlanlage gemahlen, mit der während des Mahlvorgangs nicht nur die gewünschte Zerkleinerung, sondern auch eine zum Erhalt einer homogenen Mischung führende Vermengung der Einzelkomponenten bewirkt wird.

Bei der Herstellung von hydraulischen Bindemitteln wird in zunehmendem Maß auf Hüttensand als Einzelkomponente zurückgegriffen, weil die Menge des erzeugten Hüttensandes in den letzten Jahren angestiegen ist und dieser Stoff daher als Zumahlstoff mit latent hydraulischen Eigenschaften für die Herstellung hydraulischer Bindemittel zur Verfügung steht.

Bei Einsatz der vorstehend beschriebenen Verfahren zum Herstellen hydraulischer Bindemittel, bei denen sämtliche Einzelkomponenten in einer gemeinsamen Mahlanlage zerkleinert und miteinander vermischt werden, hat es sich jedoch gezeigt, daß die Endfestigkeit der damit erzeugten Hüttenzemente zwischen 7 und 28 Tagen nur mäßig zunimmt. Eine Ursache für dieses Verhalten ist darin zu sehen, daß der schwerer mahlbare Hüttensandanteil bei gemeinsamer Vermahlung von Hüttensand, Klinker und weiteren Einzelkomponenten zu grob aufgemahlen wird. Daher können die latent hydraulischen Eigenschaften des Hüttensands nicht optimal zur gezielten Steuerung der Endfestigkeiten genutzt werden. Darüber hinaus besteht die Gefahr, daß der alkalireiche Klinker bei der gemeinsamen Vermahlung zu fein gemahlen wird. Das hat ein überdurchschnittliches Maß an Anfangsfestigkeiten zur Folge, erhöht die Hydratationswärme und führt zu einem erhöhten Wasseranspruch bei Herstellung eines Baumaterials, wie etwa Beton oder Mörtel unter Verwendung von Hüttenzementen als hydraulisches Bindemittel. Das bedeutet, daß bei Einsatz der üblichen Verfahren zur Herstellung von Hüttenzement, abhängig vom Chemismus der Einzelstoffe, kein gezieltes Aussteuern der Anfangsfestigkeiten, der Endfestigkeiten, des Erstarrungsverhaltens und der Verarbeitbarkeit möglich ist.

Ferner hat die gemeinsame Vermahlung von Hüttensand mit anderen Einzelkomponenten eines hydraulischen Bindemittels einen erhöhten Verschleiß der Mahlanlage zur Folge. Das ist darauf zurückzuführen, daß der Hüttensand eine vergleichsweise große Härte aufweist und daher nur schwer mahlbar ist. Das führt zu einer hohen Abnutzung der Mahlwerkzeuge in üblichen Mahlanlagen, wie etwa Kugelmühlen, Gutbett-Walzenmühlen, Vertikal-Wälzmühlen, Horizontal-Wälzmühlen u. dgl.. Ferner wird bei der Vermahlung von Hüttensand im Bereich der zur Abtrennung des bereits hinreichend zerkleinerten Hüttensandmehls von noch nicht ausreichend fein gemahlenem Hüttensand üblicherweise eingesetzten Windsichter ein besonders hoher Verschleiß beobachtet.

Im Hinblick auf die gerade beschriebenen Probleme im Stand der Technik wurde bereits ein Verfahren der eingangs angegebenen Art vorgeschlagen, bei dem der Hüttensand getrennt von den übrigen Einzelkomponenten eines hydraulischen Bindemittels auf die zum Erhalt der gewünschten Eigenschaften des hydraulischen Bindemittels benötigte Korngröße zerkleinert wird. Auf diese Weise kann die Korngröße des Hüttensandes unabhängig von der Korngröße der übrigen Einzelkomponenten eingestellt werden. Daher können die Endfestigkeiten der durch getrennte Zerkleinerung von Hüttensand hergestellten Hüttenzemente gezielt gesteuert werden. Ferner kann die zur Zerkleinerung des Hüttensandes eingesetzte Mahlanlage an die besonderen Eigenschaften des Hüttensandes angepaßt werden, so daß ein geringerer Verschleiß der Mahlwerkzeuge und der entsprechenden Windsichter erreicht wird.

Bei Ausführung der bekannten Verfahren dieser Art werden das Klinker-Gips-Gemisch und der Hüttensand getrennt voneinander gemahlen und die Einzelkomponenten nach der Mahlung in Silos gefördert und zwischengelagert. Zur Herstellung des fertigen Bindemittels werden die Einzelkomponenten aus den Zwischenlagersilos abgezogen und in eine Mischanlage eingeleitet. Mit dieser Mischanlage werden die getrennt gemahlenen Einzelkomponenten in einem beliebigen Mischungsverhältnis vermischt. Danach wird das fertige hydraulische Bindemittel mit Hilfe einer Fördereinrichtung längs einer vorgegebenen Förderstrecke in eine Fertiggutsiloanlage gefördert oder es wird direkt verladen, beispielsweise in Silo-LKWs. Falls die Mengenanteile an Hüttensand in dem fertigen hydraulischen Bindemittel variieren, ist eine gezielte Steuerung der Eigenschaften des hydraulischen Bindemittels, insbesondere eine gezielte Sulfatzugabe (SO₃-Aussteuerung) mit dem bekannten Verfahren nur sehr schwer möglich, bzw. bei einer hohen Anzahl an unterschiedlichen Hüttenzementen nicht optimal für jedes einzelne Fertigprodukt erreichbar.

Angesichts der vorstehend erläuterten Probleme im Stand der Technik, liegt der Erfindung die Aufgabe zugrunde ein Verfahren der eingangs beschriebenen Art bereitzustellen, mit dem unter Gewährleistung einer hohen Verschleißfestigkeit hydraulische Bindemittel mit vorgegebenen Eigenschaften, insbesondere Erstattungseigenschaften, und variierenden Zusammensetzungen zuverlässig hergestellt werden können.

Erfindungsgemäß wird diese Aufgabe durch eine Weiterbildung des Verfahrens der zur Gewährleistung einer hohen Verschleißfestigkeit bereits bekannten getrennten Zerkleinerung der Einzelkomponenten gelöst, die im wesentlichen dadurch gekennzeichnet ist, daß die in der gemeinsamen Mahleinrichtung zerkleinerten Einzelkomponenten, wie etwa das Zementklinker-Gips-Gemisch, unmittelbar nach der Zerkleinerung ohne vorherige Zwischenlagerung mit der getrennt davon zerkleinerten weiteren Einzelkomponente, wie etwa dem Hüttensandmehl, zusammengeführt werden.

Diese Erfindung geht auf die Erkenntnis zurück, daß die Veränderung des Hüttensandanteils in einem hydraulischen Bindemittel zum Erhalt der gewünschten Eigenschaften eine Anpassung der Zusammensetzung des Zementklinker-Gips-Gemisches erfordert. So ist bei Erhöhung des Hüttensandanteils beispielsweise eine Erhöhung der Sulfatzugabe durch entsprechende Erhöhung des Gips-Anteils in dem Zementklinker-Gips-Gemisch erforderlich. Im Hinblick auf die im allgemeinen begrenzte Anzahl der bislang zur Zwischenlagerung des zerkleinerten Zementklinker-Gips-Gemisches eingesetzten Zwischenlagersilos ist eine genaue Anpassung der Zusammensetzung dieses Gemisches an den Hüttensandanteil in dem fertigen Bindemittel zum Erhalt der gewünschten Eigenschaften nicht für jede Bindemittelzusammensetzung möglich. Vielmehr muß bei den bekannten Verfahren auf in den Zwischenlagersilos enthaltene Standardmischungen zurückgegriffen werden. Diese Überlegungen gelten nicht nur für die Zusammensetzung des Zementklinker-Gips-Gemisches, sondern auch für die ebenfalls für die Eigenschaften des fertigen hydraulischen Bindemittels verantwortlichen sonstigen Eigenschaften dieses Gemisches, wie etwa die Feinheit und Kornverteilung. Auch hinsichtlich dieser Eigenschaften erlauben die bekannten Verfahren im Hinblick auf die begrenzte Anzahl der zur Verfügung stehenden Zwischenlagersilos nur eine sehr ungenaue Anpassung an variierende Hüttensandanteile im fertigen Bindemittel.

Bei dem erfindungsgemäßen Verfahren wird auf eine Zwischenlagerung des zerkleinerten Zementklinker-Gips-Gemisches verzichtet. Dadurch entfällt die Notwendigkeit, bei der Herstellung des hydraulischen Bindemittels auf in Zwischenlagersilos vorhandene Standardmischungen zurückzugreifen. Vielmehr ermöglicht das erfindungsgemäße Verfahren die Herstellung eines hydraulischen Bindemittels mit vorgegebenen Eigenschaften selbst bei variierendem Hüttensandanteil durch unmittelbare Anpassung der Mühlenleistung und/oder der Zusammensetzung des in die Mühle eingeleiteten, noch nicht zerkleinerten Gemischs. Auf diese Weise wird sowohl eine gezielte Ansteuerung des SO₃-Gehaltes durch entsprechende Variation der Mühlenleistung und/oder der Zusammensetzung des in die Mühle eingeleiteten Gemischs, als auch eine optimale Abstimmung der Einzelkomponenten hinsichtlich der Feinheit und Kornverteilung auf das gewünschte Endprodukt sichergestellt.

Insgesamt sichert das erfindungsgemäße Verfahren eine zur Herstellung aller möglichen Hüttenzemente mit einem Zusatz von 5 bis 95% gemahlener Hüttensand-Mengenanteile genügend hohe Flexibilität, wobei über die gesamte Variationsbreite eine optimale Ansteuerung des Sulfatgehaltes und darüber hinaus eine optimale Anpassung der Feinheit bzw. Kornverteilung der getrennt gemahlenen Einzelkomponenten gewährleistet wird. Dieser Vorteil wird durch die erfindungsgemäß vorgeschlagene "just in time" Produktion des Zementklinker-Gips-Gemisches ohne Zwischenlagerung erreicht. Dabei wurde insbesondere erkannt, daß die mit dem Verzicht auf eine Zwischenlagerung verbundenen Nachteile bei der kontinuierlichen Produktion eines hydraulischen Bindemittels im Hinblick auf die dadurch erreichte höhere Flexibilität in Kauf genommen werden können.

Ein weiterer Vorteil des erfindungsgemäßen Verfahren ist darin zu sehen, daß die Menge der bei einem Sortenwechsel entstehenden Übergangszemente minimiert werden kann. Die Menge dieser Übergangszemente ist im wesentlichen von der Durchlaufzeit in der Mahlanlage abhängig. Bei dem erfindungsgemäßen Verfahren der getrennten Vermahlung und Vermischung wird nur das Zementklinker-Gips-Gemisch in der Zementmahlanlage hergestellt. Daher ist die Menge der Übergangszemente nur auf den Mengenanteil des getrennt gemahlenen Zementklinker-Gips-Gemisches beschränkt. Der zerkleinerte Hüttensand kann unmittelbar nach Erreichen der optimalen Klinker-Gips-Mischung ohne Vorlaufzeit und zusätzlich entstehenden Übergangszement zugemischt werden.

Schließlich erlaubt das erfindungsgemäße Verfahren auch noch eine Verringerung der Investitionskosten für eine zur Ausführung dieses Verfahrens geeignete Vorrichtung, weil zur Zwischenlagerung des Zementklinker-Gips-Gemischs geeignete Zwischenlagersilos sowie entsprechende Zu- und Abtransporteinrichtungen entfallen können.

Wie vorstehend bereits erläutert, hat es sich im Hinblick auf die zur Herstellung eines hydraulischen Bindemittels mit vorgegebenen Eigenschaften bei variierendem Hüttensandanteil notwendige Anpassung der Zusammensetzung des zerkleinerten Zementklinker-Gips-Gemisches als vorteilhaft erwiesen, wenn diese Einzelkomponenten zur Zerkleinerung aus mindestens zwei zur getrennten Lagerung dieser Einzelkomponenten ausgelegten Silos abgezogen und in die gemeinsame Mahleinrichtung eingeleitet werden, wobei die Mengen der pro Zeit aus den Silos abgezogenen Einzelkomponenten getrennt voneinander in Abhängigkeit von einer vorgegebenen Zusammensetzung des hydraulischen Bindemittels gesteuert werden. Weiter ist im Rahmen der Erfindung daran gedacht, daß die Betriebsparameter der Mahleinrichtung, wie etwa der Durchsatz pro Zeit, die Feinheit und Kornverteilung der damit zerkleinerten Einzelkomponenten u. dgl., in Abhängigkeit von einer vorgegebenen Zusammensetzung, Feinheit und/oder Kornverteilung des hydraulischen Bindemittels gesteuert werden, um so die gewünschten Eigenschaften des hydraulischen Bindemittels bei variierendem Hüttensandanteil sicherzustellen.

Ferner hat es sich im Hinblick auf die einschlägige Norm DIN 1164 als besonders zweckmäßig erwiesen, wenn im Rahmen des erfindungsgemäßen Verfahrens nicht nur das Zementklinker-Gips-Gemisch sondern auch die weitere Einzelkomponente, wie etwa der Hüttensand, in einer von der gemeinsamen Mahleinrichtung getrennten weiteren Mahleinrichtung zerkleinert wird. Zur Sicherung einer kontinuierlichen Produktion kann die weitere Einzelkomponente ohne Beeinträchtigung der Flexibilität bei der Herstellung von Hüttensand-Zementen mit gewünschten Eigenschaften und variierenden Hüttensand-Anteilen nach der Zerkleinerung in einem Vorratsbehälter gelagert und zur Zusammenführung mit den in der gemeinsamen Mahleinrichtung zerkleinerten Einzelkomponenten aus dem Vorratsbehälter abgezogen werden.

Zur Einstellung der gewünschten Eigenschaften des hydraulischen Bindemittels ist dabei insbesondere auch daran gedacht, die Menge der pro Zeit aus dem Vorratsbehälter abgezogenen weiteren Einzelkomponente und/oder die Betriebsparameter der weiteren Mahleinrichtung in Abhängigkeit von einer vorgegebenen Zusammensetzung, Feinheit und/oder Kornverteilung des hydraulischen Bindemittels zu steuern. Weiter ist im Rahmen der Erfindung auch daran gedacht, die Betriebsparameter der Mahleinrichtung und/oder die Mengen der pro Zeit aus den Silos abgezogenen und in die gemeinsame Mahleinrichtung eingeleiteten Einzelkomponenten in Abhängigkeit von den Betriebsparametern der weiteren Mahleinrichtung und/oder der Menge der pro Zeit aus dem Vorratsbehälter abgezogenen weiteren Einzelkomponente und/oder der vorgegebenen Zusammensetzung, Feinheit und/oder Kornverteilung des hydraulischen Bindemittels zu steuern. Ferner kann auch der umgekehrte Weg gewählt werden, nämlich die Steuerung der Menge der pro Zeit aus dem Vorratsbehälter abgezogenen weiteren Einzelkomponente und/oder der Betriebsparameter der weiteren Mahleinrichtung in Abhängigkeit von den Mengen der pro Zeit aus den Silos abgezogenen Einzelkomponenten und/oder den Betriebsparametern der gemeinsamen Mahleinrichtung.

Wie vorstehend bereits erläutert, ist es bei einer getrennten Vermahlung von Hüttensand einerseits und den übrigen Einzelkomponenten des hydraulischen Bindemittels, wie etwa Zementklinker und Gips, andererseits zur Erzeugung einer homogenen Mischung der Einzelkomponenten erforderlich, eine zusätzliche Mischanlage einzusetzen. Hier kommen u.a. Doppelwellentrogmischer, Tellermischer und Trommeldurchlaufmischer in Betracht.

Besonders vorteilhaft ist der Einsatz eines Durchlaufmischers, weil dieser einen bei der Massenproduktion hydraulischer Bindemittel gewünschten kontinuierlichen Betrieb ermöglicht. Die zur Herstellung hydraulischer Bindemittel eingesetzten Durchlaufmischer weisen üblicherweise einen von einem aus den zuvor hergestellten zerkleinerten Einzelkomponenten bestehenden Schüttgutstrom durchlaufenen Mischraum sowie ein in dem Mischraum angeordnetes Mischwerkzeug auf. Als Mischwerkzeug werden üblicherweise Mischschaufeln eingesetzt, die an einer in dem Mischraum angeordneten und sich etwa in Durchlaufrichtung erstreckenden, umlaufend angetriebenen Mischerwelle festgelegt sind. Der Grad der mit diesen Mischanlagen erreichten Homogenität des hydraulischen Bindemittels wird durch die Zusammensetzung des in den Mischraum eingeführten Schüttgutstroms, die Durchlaufgeschwindigkeit und die Umdrehungsgeschwindigkeit der Mischerwelle bzw. der daran befestigten Mischschaufeln eingestellt. Insgesamt kann so unter Einsatz des erfindungsgemäßen Verfahrens durch getrennte Zerkleinerung des Hüttensandes, genaue Einstellung der Eigenschaften des Zementklinker-Gips-Gemischs und richtige Wahl der Mischparameter der Mischanlage ein hydraulisches Bindemittel in Form einer homogenen Mischung der Einzelkomponenten mit den gewünschten Eigenschaften hergestellt werden.

Die bekannten Mischanlagen unterliegen bei der Herstellung eines homogenen Gemischs aus den Einzelkomponenten des hydraulischen Bindemittels jedoch ebenfalls einem hohen Verschleiß. Ferner wird durch den Einsatz dieser Mischanlage der bei der Herstellung hydraulischer Bindemittel ohnehin schon sehr hohe Energieverbrauch weiter erhöht.

Angesichts dieser Probleme im Stand der Technik hat es sich bei der Ausführung des erfindungsgemäßen Verfahrens zur Gewährleistung einer hohen Verschleißfestigkeit und eines geringen Energieverbrauchs als besonders vorteilhaft erwiesen, wenn der aus den zusammengeführten zerkleinerten Einzelkomponenten bestehende Schüttgutstrom zur Herstellung einer homogenen Mischung einen Mischraum einer Mischanlage in einer Durchlaufrichtung durchläuft, in dem die Mischung durch eine Ablenkung eines Teilstroms des Schüttgutstroms an einem stationären Ablenkelement quer zur Durchlaufrichtung bewirkt wird.

Bei dieser Weiterbildung des erfindungsgemäßen Verfahrens wird von der Erkenntnis Gebrauch gemacht, daß zur Herstellung einer homogenen Mischung aus den Einzelkomponenten des hydraulischen Bindemittels die Eigengeschwindigkeit dieser Einzelkomponenten in dem Mischraum ausgenutzt und daher auf den Einsatz eines mit einem Fremdantrieb umlaufend angetriebenen Mischwerkzeugs in dem Mischraum verzichtet werden kann. Erfindungsgemäß erfolgt diese Ausnutzung der Eigengeschwindigkeit der Einzelkomponenten durch ein stationäres, also feststehend in dem Mischraum montiertes Ablenkelement. Durch den Ersatz der bei den herkömmlichen Mischanlagen benutzten drehbar gelagerten Mischwerkzeuge durch ein stationäres Mischwerkzeug wird die Verschleißfestigkeit der erfindungegemäßen Vorrichtung deutlich verbessert.

Ferner kann bei der erfindungsgemäßen Weiterbildung der bekannten Vorrichtung vom Einsatz eines Fremdantriebs für das Mischwerkzeug abgesehen werden, weil die zur Bewirkung der Vermischung der Einzelkomponenten notwendige Querbeschleunigung bzw. Scherung des den Mischraum durchlaufenden Schüttgutstroms unter Ausnutzung der Geschwindigkeit der Einzelkomponenten in der Durchlaufrichtung erfolgt. Daher wird durch die erfindungsgemäße Weiterbildung der bekannten Vorrichtung auch der zur Herstellung eines hydraulischen Bindemittels benötigte Energieverbrauch deutlich gesenkt.

Darüber hinaus erlaubt die gerade beschriebene Weiterbildung des erfindungsgemäßen Verfahrens auch noch eine Verringerung der Investitionskosten für eine zur Ausführung dieses Verfahrens geeignete Vorrichtung, weil die bekannten Mischanlagen mit umlaufend angetriebenen Mischwerkzeugen im Vergleich zu der erfindungsgemäß eingesetzten Mischanlage mit stationären Ablenkelementen wesentlich aufwendiger und damit teurer sind. Ferner sind die Verschleißwerkzeuge in der zur Ausführung des erfindungsgemäßen Verfahrens geeigneten Mischanlage, die auch als statische Mischanlage bezeichnet werden kann, wesentlich einfacher und kostengünstiger.

Schließlich wird mit jedem Ablenkelement der erfindungsgemäßen Vorrichtung nur ein Teilstrom des Schüttgutstromes quer zur Durchlaufrichtung abgelenkt, so daß dieser Teilstrom einerseits von einem benachbarten Teilstrom getrennt und andererseits mit einem weiteren benachbarten Teilstrom zusammengeführt wird. Durch diese Trennung und Zusammenführung der einzelnen Teilströme des Schüttgutstroms kann insgesamt eine vollständige Durchmischung des Schüttgutstroms erreicht und die Erzeugung eines aus einem homogenen Gemisch der Einzelkomponenten bestehenden hydraulischen Bindemittels sichergestellt werden.

Bei der Durchführung dieses Verfahrens hat es sich gezeigt, daß eine zufriedenstellende Durchmischung des Schüttgutstromes erreicht werden kann, wenn der Schüttgutstrom den Mischraum mit einem Massenstrom von etwa 2O bis 3OO Tonnen pro Stunde durchläuft, wobei der Massenstrom pro Fläche zweckmäßigerweise etwa 15 bis 85O Tonnen pro Stunde und Quadratmeter beträgt. Weiter hat es sich gezeigt, daß eine zufriedenstellende Vermischung der Einzelkomponenten des Schüttgutstroms mit den stationären Ablenkelementen erreichbar ist, wenn die zerkleinerten Einzelkomponenten den Mischraum mit einer Geschwindigkeit von etwa 1 bis 6 Meter pro Sekunde durchlaufen.

Wie der vorstehenden Beschreibung zu entnehmen ist, ist eine zur Durchführung des erfindungsgemäßen Verfahrens geeignete Vorrichtung mit einer zum Erzeugen einer homogenen Mischung der Einzelkomponenten betreibbaren und mindestens einen in einer Durchlaufrichtung von einem aus den Einzelkomponenten bestehenden Schüttgutstrom durchlaufenen Mischraum sowie ein in dem Mischraum angeordnetes Mischwerkzeug aufweisenden Mischanlage im wesentlichen dadurch gekennzeichnet, daß das Mischwerkzeug mindestens ein stationäres, also feststehend in dem Mischraum montiertes und zum Ablenken eines Teilstroms des Schüttgutstroms quer zur Durchlaufrichtung dienendes Ablenkelement aufweist.

Die Ablenkelemente der erfindungsgemäßen Vorrichtung können ohne übermäßige Erhöhung des Strömungswiderstandes im Mischraum besonders einfach, beispielsweise in Form von einfachen Leitblechen, gebildet werden, wenn sie mindestens eine einen spitzen Winkel von etwa 15 bis 45° mit der Durchlaufrichtung einschließende, im wesentlichen ebene Anlenkfläche aufweisen. Den auf diese Ablenkflächen aufprallenden Teilchen des Schüttgutstroms wird ein quer zur Durchlaufrichtung gerichteter Impuls erteilt, wodurch die gewünschte Ablenkung und Vermischung mit benachbarten Teilströmen des Schüttgutstroms erfolgt.

Wie vorstehend bereits angedeutet, ist es zum Erhalt einer möglichst homogenen Mischung der Einzelkomponenten besonders vorteilhaft, wenn das Mischwerkzeug eine Mehrzahl von zum Ablenken jeweiliger Teilströme des Schüttstromes ausgelegten Ablenkelementen aufweist. Durch Einsatz einer Mehrzahl von Ablenkelementen können verschiedene Teilströme voneinander getrennt bzw. zusammengeführt werden, was insgesamt zu einer besonders guten Durchmischung des Schüttgutstromes führt.

Zur Bewirkung einer guten Durchmischung über den gesamten senkrecht zur Durchlaufrichtung verlaufenden Querschnitt des Schüttgutstromes hat es sich als besonders zweckmäßig erwiesen, wenn mindestens zwei Ablenkelemente in einer sich etwa senkrecht zur Durchlaufrichtung erstreckenden Schicht des Mischraums nebeneinander angeordnet sind.

Die die Durchmischung der Einzelkomponenten bewirkende Trennung bzw. Zusammenführung der einzelnen Teilströme kann dabei besonders wirkungsvoll erreicht werden, wenn die Ablenkflächen von zwei nebeneinander angeordneten Ablenkelementen nach Art eines Daches und/oder eines Trichters etwa spiegelsymmetrisch bezüglich einer parallel zur Durchlaufrichtung verlaufenden Ebene angeordnet sind. Bei Verwendung von drei oder mehr nebeneinander angeordneten Ablenkelementen kann eine weitere Steigerung der Mischwirkung erreicht werden, wenn die Ablenkfläche mindestens eines zwischen zwei anderen Ablenkelementen angeordneten Ablenkelementes mit der Ablenkfläche des auf seiner einen Seite angeordneten Ablenkelementes eine dachförmige Struktur, bei der der Abstand zwischen der Ablenkfläche in Durchlaufrichtung zunimmt, und mit der Ablenkfläche des auf seiner anderen Seite angeordneten Ablenkelementes eine trichterförmige Struktur bildet, bei der der Abstand zwischen den Ablenkflächen in Durchlaufrichtung abnimmt. Mit dieser Anordnung wird mit dem zwischen zwei anderen Ablenkelementen angeordneten Ablenkelement einerseits eine Trennung eines Teilstroms des Schüttgutstroms von einem benachbarten Teilstrom und andererseits eine Zusammenführung dieses Teilstroms mit einem auf der anderen Seite benachbarten Teilstrom erreicht, was eine besonders gute Durchmischung bewirkt.

Bei Einsatz einer Mehrzahl von nebeneinander angeordneten Ablenkelementen kann eine gute Mischwirkung ohne übermäßige Erhöhung des Strömungswiderstandes für den Schüttgutstrom durch die Ablenkelemente erreicht werden, wenn der Abstand zwischen den nebeneinander angeordneten Ablenkelementen etwa der Abmessung der Ablenkelemente in einer senkrecht zur Durchlaufrichtung verlaufenden Richtung entspricht.

Eine weitere Verbesserung der Mischwirkung kann erreicht werden, wenn mindestens zwei Ablenkelemente in zwei in Durchlaufrichtung hintereinander angeordneten Schichten des Mischraums angeordnet sind, weil mit dieser Anordnung ein mehrstufiger Mischprozeß mit den in den hintereinander angeordneten Schichten angeordneten Ablenkelementen durchführbar ist.

Als besonders zweckmäßig hat es sich dabei erwiesen, wenn die Projektionen der Flächennormalen auf den Ablenkflächen von zwei hintereinander angeordneten Ablenkelementen auf eine senkrecht zur Durchlaufrichtung verlaufende Ebene einen Winkel von etwa 9O° miteinander einschließen. Mit dieser Anordnung können Teilströme des Schüttgutstroms mit den in hintereinander angeordneten Schichten des Mischerraums angeordneten Ablenkelementen in zwei jeweils quer zur Durchlaufrichtung verlaufenden und einen Winkel von etwa 9O° miteinander einschließenden Richtungen abgelenkt werden. Auf diese Weise wird neben einer Vermischung der Einzelkomponenten zwischen den einzelnen nebeneinander angeordneten Teilströmen des Schüttgutstroms auch noch eine Durchmischung innerhalb der einzelnen Teilströme erreicht, weil der bei Betrachtung einer ersten Schicht einen Teilstrom bildende Bestandteil des Schüttgutstroms mit den in der nächsten Schicht angeordneten Ablenkelementen in eine Mehrzahl von weiteren Teilströmen aufgeteilt wird.

Auch bei Verwendung von mehreren in einer Mehrzahl von hintereinander angeordneten Schichten angeordneten Ablenkelementen hat es sich gezeigt, daß eine gute Mischwirkung ohne übermäßige Erhöhung des Strömungswiderstandes durch die Ablenkelemente erreichbar ist, wenn der Abstand zwischen den hintereinander angeordneten Ablenkelementen etwa der Abmessung der Ablenkelemente in Durchlaufrichtung entspricht.

Zur Zusammenführung und Weiterleitung des Schüttgutstroms zu einer nach Durchlaufen des Mischraums erreichten weiteren Einrichtung, wie etwa einem Schwingsieb der erfindungsgemäßen Vorrichtung (s.u.) hat es sich als besonders zweckmäßig erwiesen, wenn die Querschnittsfläche des Mischraums in Durchlaufrichtung zumindest abschnittweise nach Art eines Trichters geringer wird.

Zum Erhalt einer zufriedenstellenden Durchmischung der Einzelkomponenten kann neben einer mehrstufigen Vermischung im Mischraum durch Einsatz einer Mehrzahl von in Durchlaufrichtung hintereinander angeordneten Ablenkelementen auch daran gedacht werden, die Mischanlage der erfindungsgemäßen Vorrichtung mit zwei oder mehr nacheinander von dem Schüttgutstrom durchlaufenen Mischräumen auszustatten, von denen jeder mindestens ein darin feststehend angeordnetes und zum Ablenken eines Teilstroms des Schüttgutstroms quer zur Durchlaufrichtung dienendes Ablenkelement aufweist. Dabei ist insbesondere auch daran gedacht, zwischen den einzelnen Mischräumen weitere Komponenten der erfindungsgemäßen Vorrichtung anzuordnen, wie etwa ein Förderelement einer Fördereinrichtung.

Zur besseren Überwachung des mit der erfindungsgemäßen Vorrichtung ausführbaren Verfahrens zur Herstellung von hydraulischen Bindemitteln hat es sich insbesondere im Hinblick auf die einschlägige Norm DIN 1164 als besonders zweckmäßig erwiesen, wenn die erfindungsgemäße Vorrichtung nicht nur die zum Herstellen einer homogenen Mischung der Einzelkomponenten betreibbare Mischanlage, sondern auch noch eine zum Zerkleinern der Einzelkomponenten des hydraulischen Bindemittels betreibbare Mahlanlage aufweist. Erst durch diese Anordnung kann die nach der oben genannten Norm geforderte hohe Gleichmäßigkeit aller Zementeigenschaften auch bei einer kontinuierlichen Herstellung in großen Massenströmen sichergestellt werden.

Wie eingangs bereits erläutert hat es sich im Hinblick auf die Sicherstellung der gewünschten Eigenschaften des hydraulischen Bindemittels und zur Erhöhung der Verschleißfestigkeit als besonders zweckmäßig erwiesen, wenn die Mahlanlage mindestens zwei Mahleinrichtungen aufweist, mit denen die Einzelkomponenten getrennt voneinander zerkleinert werden können, wobei eine erste der Mahleinrichtungen zum Zerkleinern von Hüttensand und eine zweite der Mahleinrichtungen zum Zerkleinern eines Gemisches aus Zementklinker, Gips und ggf. weiteren Zumahlstoffen ausgelegt ist.

Zur Sicherung einer kontinuierlichen Produktion eines hydraulischen Bindemittels mit großen Massenströmen ist es zweckmäßig, wenn der ersten Mahleinrichtung mindestens ein Vorratsbehälter zum Lagern des zerkleinerten Hüttensandes zugeordnet ist, aus dem der zerkleinerte Hüttensand mit einer Abzugeinrichtung abgezogen und mit dem zerkleinerten Gemisch aus Zementklinker, Gips und ggf. weiteren Zumahlstoffen zu dem Schüttgutstrom zusammengeführt werden kann. Dabei kann die Zusammensetzung des Schüttgutstroms über einen weiten Zusammensetzungsbereich, bei dem der Massenanteil des Hüttensandes von 5 bis 95 Gew.-% variiert, kontinuierlich geändert werden, wenn die Abzugeinrichtung mindestens ein zum Festlegen der pro Zeit aus dem Vorratsbehälter abgezogenen Menge des zerkleinerten Hüttensandes betreibbares Dosierelement, wie etwa eine Dosierrotorwaage, aufweist.

Bei Einsatz verschiedener Hüttensande mit unterschiedlichen Eigenschaften kann auch daran gedacht werden, diese Hüttensande nach erfolgter Zerkleinerung getrennt voneinander in entsprechenden Silos zwischenzulagern und den Vorratsbehälter mit den in den Silos zwischengelagerten Hüttensanden zu beschicken. Dabei ist insbesondere auch daran gedacht, die einzelnen zur Zwischenlagerung der Hüttensande verwendeten Silos mit entsprechenden Dosierelementen, wie etwa Dosierwalzen und Durchlaufmeßgeräten zu versehen, die zum einen den Abzug der Hüttensande aus den jeweiligen Silos in vorgegebenen Mengen pro Zeit ermöglichen und andererseits einen Verschneidebetrieb erlauben, bei dem die aus den Silos abgezogenen Hüttensande miteinander vermischt und erst danach in den Vorratsbehälter gefüllt werden.

Wie vorstehend bereits ausführlich erläutert, ist es zur Herstellung eines hydraulischen Bindemittels mit vorgegebenen Eigenschaften bei variierendem Hüttensand-Anteil zweckmäßig, wenn das mit der zweiten Mahleinrichtung zerkleinerte Zementklinker-Gips-Gemisch unmittelbar nach der Zerkleinerung ohne Zwischenlagerung in einem Silo mit dem zerkleinerten Hüttensand zusammengeführt wird. Dazu kann das zerkleinerte Zementklinker-Gips-Gemisch beispielsweise mit einer geeigneten Fördereinrichtung, wie etwa einer Luftförderrinne oder einem Förderband unmittelbar nach der Zerkleinerung zu einem Zusammenführungsbereich gefördert werden, in dem die Zusammenführung mit dem zerkleinerten Hüttensand erfolgt.

Zweckmäßigerweise weist eine erfindungsgemäße Vorrichtung neben der Mischanlage und der Mahlanlage auch noch eine Fördereinrichtung auf, mit der die zerkleinerten Einzelkomponenten längs einer vorgegebenen Förderstrecke zu einer Zementsiloanlage förderbar sind. Diese Förderanlage kann beispielsweise aus Becherwerken, Luftförderrinnen, Schwingsieben, Übergabeschurren u. dgl. bestehen. Durch diese Förderelemente wird ebenfalls eine Vermischung der Einzelkomponenten des den Mischraum der Mischanlage durchlaufenden Schüttgutstromes erreicht. Daher wird durch Kombination der Mischanlage der erfindungsgemäßen Vorrichtung mit der Fördereinrichtung eine weitere Verbesserung der Homogenität des hydraulischen Bindemittels erreicht. Aus Platzgründen hat es sich als besonders zweckmäßig erwiesen, wenn die zerkleinerten Einzelkomponenten im Verlauf der vorgegebenen Förderstrecke die Mischanlage durchlaufen.

Falls die Fördereinrichtung mindestens ein Becherwerk aufweist, kann einer der Mischräume der Mischanlage in einer zum Beschicken des Becherwerks mit den zerkleinerten Einzelkomponenten dienenden Übergabeschurre angeordnet sein, während ein weiterer Mischraum der Mischanlage in einer zum Weiterleiten der aus dem Becherwerk abgeworfenen Einzelkomponenten dienenden Abwurfschurre angeordnet ist.

Die mit der Mischanlage bewirkte Vermischung der Einzelkomponenten des hydraulischen Bindemittels erfährt eine besonders gute Unterstützung durch die Fördereinrichtung, wenn diese ein Schwingsieb aufweist, dem die zerkleinerten Einzelkomponenten mit der Abwurfschurre aufgegeben werden. Sowohl in der Übergabeschurre, als auch in der Abwurfschurre durchläuft der Schüttgutstrom die Mischräume im wesentlichen in Schwererichtung, so daß kein zusätzliches Antriebselement erforderlich ist, mit dem dem Schüttgutstrom die zur Bewirkung der Durchmischung mit den Ablenkelementen erforderliche Geschwindigkeit in Durchlaufrichtung erteilt wird.

Wie der vorstehenden Erläuterung zu entnehmen ist, zeichnet sich die zur Herstellung der erfindungsgemäßen Vorrichtung gedachte Mischanlage im wesentlichen dadurch aus, daß sie ein von dem aus den Einzelkomponenten des hydraulischen Bindemittels bestehenden Schüttgutstrom durchlaufenen Mischraum, sowie mindestens ein stationär in dem Mischraum angebrachtes und zum Ablenken eines Teilstroms des Schüttgutstroms quer zur Durchlaufrichtung dienendes Ablenkelement aufweist.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigt:
- Fig. 1: eine schematische Darstellung einer erfindungsgemäßen Vorrichtung,
- Fig. 2: eine Schnittansicht durch einen in einer Übergabseschurre der Vorrichtung nach Fig. 1 angeordneten Mischraum,
- Fig. 3: eine Schnittdarstellung des Mischraums nach Fig. 2 längs der in Fig. 2 angegebenen Schnittebene I-I,
- Fig. 4: eine der Fig. 2 entsprechende Schnittdarstellung eines Mischraums einer erfindungsgemäßen Vorrichtung, in der die Funktion der Mischanlage schematisch dargestellt ist und
- Fig. 5: eine der Fig. 3 entsprechende Schnittdarstellung eines Mischraums einer erfindungsgemäßen Mischanlage, die ebenfalls zur Erläuterung der Funktion der erfindungsgemäßen Mischanlage dient.

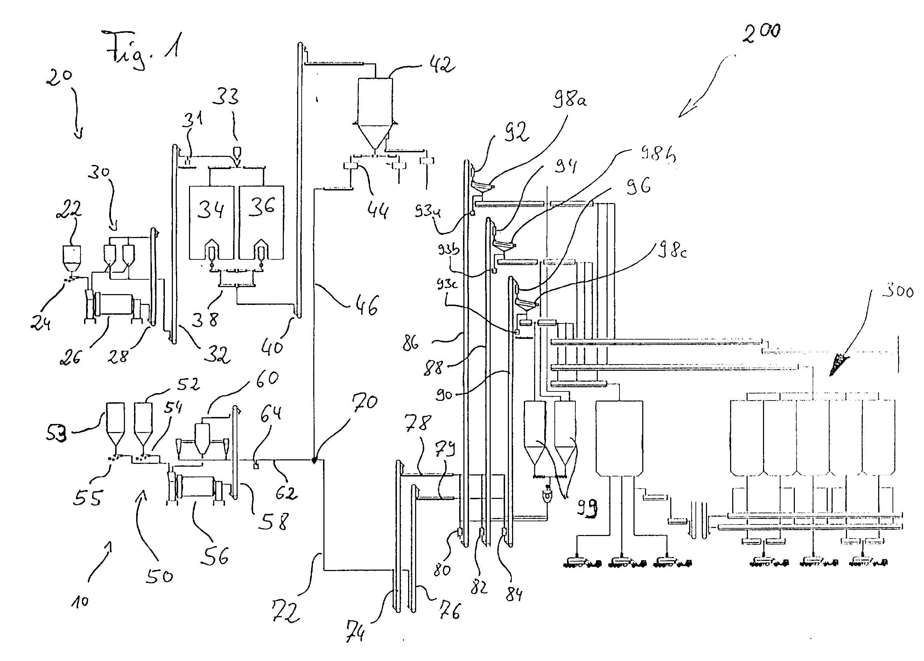

Die in Fig. 1 dargestellte Vorrichtung umfaßt im wesentlichen eine zum Zerkleinern der Einzelkomponenten des hydraulischen Bindemittels dienende Mahlanlage 1O, eine zum Lagern des fertigen hydraulischen Bindemittels dienende Fertiggutsiloanlage 3OO sowie eine insgesamt mit 200 bezeichnete und zum Fördern der zerkleinerten Einzelkomponenten von der Mahlanlage 1O zur Fertiggutsiloanlage 300 ausgelegte Fördereinrichtung, in der eine erfindungsgemäße Mischanlage integriert ist.

Die Mahlanlage 1O umfaßt eine erste zum Zerkleinern von Hüttensand ausgelegte Mahleinrichtung 2O und eine zweite zum Zerkleinern eines im wesentlichen aus Gips und Zementklinker bestehenden Gemischs ausgelegte zweite Mahleinrichtung 5O.

In der ersten Mahleinrichtung 2O wird der üblicherweise per Schiff mit einem Feuchtigkeitsgehalt von 4 bis 7 % angelieferte, anschließend in einem Naßschlackesilo gelagerte und in einem nachgeschalteten Trommeltrockner auf ca. O,5 % Endfeuchtigkeit getrocknete Hüttensand aus einem von zwei Silos mit einer Lagerkapazität von jeweils 2OO Tonnen (von denen in der Zeichnung nur einer, nämlich der Silo 22, dargestellt ist) über eine Dosiereinrichtung 24 abgezogen und in eine Mühle 26 eingeleitet. Der mit der Mühle 26 zerkleinerte Hüttensand wird an ein erstes Becherwerk 28 übergeben und damit zu einer in Form eines Windsichters gebildeten Trenneinrichtung 3O gefördert. Mit der Trenneinrichtung 3O werden die noch nicht genügend zerkleinerten Hüttensandbestandteile von den übrigen Hüttensandbestandteilen getrennt und erneut in die Mühle 26 eingeleitet. Die bereits hinreichend zerkleinerten Hüttensandbestandteile werden an ein zweites Becherwerk 32 übergeben. Mit dem zweiten Becherwerk 32 wird der hinreichend zerkleinerte Hüttensand über eine Weiche 33 in einen von zwei Hüttensandsilos 34 und 36 mit eine Lagerkapazität von jeweils 1O.OOO Tonnen eingeleitet. Längs der Förderstrecke zwischen dem zweiten Becherwerk 32 und der Weiche 33 ist eine Probenentnahmestation 31 angeordnet, mit der Proben des zerkleinerten Hüttensandes aus der Förderstrecke entnommen und einer Prüfung zugeführt werden können.

Den Hüttensandsilos 34 und 36 ist eine Abzugeinrichtung 38 zugeordnet. Mit dieser im wesentlichen aus Dosierwalzen und Durchlaufmeßgeräten bestehenden Abzugeinrichtung 38 können die in den Hüttensandsilos 34 und 36 zwischengelagerten Hüttensande getrennt voneinander abgezogen und ggf. miteinander verschnitten werden. Anschließend werden die abgezogenen und ggf. miteinander verschnittenen Hüttensande mit einem dritten Becherwerk 4O zu einem Vorratsbehälter 42 mit einer Lagerkapazität von etwa 2OO Tonnen gefördert. Aus diesem Vorratsbehälter 42 wird der Hüttensand mit einer eine im wesentlichen in Form einer Dosierwaage verwirklichte Dosiereinrichtung aufweisenden Abzugeinrichtung in vorgegebenen Mengen pro Zeit abgezogen und längs einer beispielsweise in Form einer Luftförderrinne gebildeten Förderstrecke 46 zu einem Zusammenführungsbereich 7O geführt, in dem der gemahlene Hüttensand mit dem in der zweiten Mahleinrichtung 5O zerkleinerten Zementklinker-Gips-Gemisch zusammengeführt wird.

Die zweite Zerkleinerungseinrichtung umfaßt einen zum Lagern von Zementklinker dienenden Silo 52 und einen zum Lagern von Gips dienenden Silo 53. Aus diesen Silos 52 und 53 wird der Zementklinker und der Gips über in Abhängigkeit von einer vorgegebenen Zusammensetzung des hydraulischen Bindemittels steuerbare Dosiereinrichtungen 54 und 55 abgezogen und in eine Mühle 56 eingeleitet, in der der Zementklinker und der Gips gemeinsam zerkleinert werden. Das zerkleinerte Zementklinker-Gips-Gemisch wird anschließend an ein viertes Becherwerk 58 übergeben und in eine in Form eines Windsichters gebildete Trenneinrichtung 6O eingeleitet. Mit dieser Trenneinrichtung 60 werden die noch nicht hinreichend zerkleinerten Bestandteile des Zementklinker-Gips-Gemisches von den übrigen Bestandteilen abgetrennt und erneut in die Mühle 56 eingeleitet. Die übrigen Bestandteile des Zementklinker-Gips-Gemisches werden beispielsweise über eine Luftförderrinne ohne Zwischenlagerung unmittelbar zum Zusammenführungsbereich 7O gefördert. Auch die zweite Zerkleinerungseinrichtung 5O ist mit einer zur Überwachung der Qualität des zerkleinerten Zementklinker-Gips-Gemisches dienenden Probenentnahmestation 64 ausgestattet.

Der in dem Zusammenführungsbereich 7O zusammengeführte und aus den zerkleinerten Einzelkomponenten des hydraulischen Bindemittels, nämlich dem zerkleinerten Hüttensand, dem zerkleinerten Zementklinker und dem zerkleinerten Gips bestehende Schüttgutstrom wird längs einer Förderstrecke 17 zu einem von zwei parallel betriebenen Becherwerken 74 und 76 gefördert und anschließend über eine von zwei ebenfalls parallel verlaufende Förderstrecken 78 und 79 an eines von drei ebenfalls parallel betriebenen Becherwerken 86, 88 und 9O übergeben. Die Übergabe erfolgt dabei über Übergabeschurren 8O, 82 oder 84. Jede dieser Übergabeschurren 8O, 82 und 84 umfaßt einen von dem Schüttgutstrom in einer im wesentlichen in Schwererichtung verlaufenden Durchlaufrichtung durchlaufenen Mischraum. In jedem dieser Mischräume ist eine Mehrzahl von Ablenkelementen angeordnet, mit denen Teilströme des Mischgutstroms quer zur Schwererichtung abgelenkt werden, um so eine Vermischung des zerkleinerten Hüttensandes mit dem zerkleinerten Zementklinker-Gips-Gemisch zu bewirken. Die in den Mischräumen angeordneten Ablenkelemente sind in drei in Durchlaufrichtung hintereinander angeordneten Schichten angeordnet. Demnach kann in jeder der Übergabeschurren 8O, 82 und 84 ein dreistufiger Mischvorgang bewirkt werden.

Das mit den Becherwerken 86, 88 und 9O geförderte Hüttensand-Gips-Zementklinker-Gemisch wird über den Becherwerken 86, 88 und 9O zugeordneten Abwurfschurren 92, 94 und 96 entsprechenden Schwingsieben 98a, 98b und 98c aufgegeben. In jeder der Abwurfschurren 92, 94 und 96 ist ein von dem aus dem entsprechenden Becherwerk 86, 88 bzw. 9O abgeworfenen Schüttgutstrom in einer im wesentlichen in Schwererichtung verlaufenden Durchlaufrichtung durchlaufener Mischraum angeordnet. Jeder dieser Mischräume umfaßt eine Mehrzahl von stationär darin angeordneten Ablenkelementen, mit denen Teilströme des Schüttgutstroms quer zur Schwererichtung abgelenkt werden, um so eine weitere Homogenisierung des Hüttensand-Gips-Zementklinker-Gemisches zu erreichen. Zur Kontrolle des durch die im Verlauf der bisher erläuterten Förderung und in den Mischräumen erreichten Homogenisierungsgrades des Hüttensand-Gips-Zementklinker-Gemischs ist jedem der Schwingsiebe 98a, 98b. 98c eine Probenentnahmestation 93a, 93b bzw. 93c zugeordnet. Falls noch kein hinreichender Homogenisierungsgrad erreicht ist, wird das Hüttensand-Gips-Zementklinker-Gemisch in Silos 99 eingeleitet und erneut den Übergabeschurren 8O, 82 und 84 mit den darin angeordneten Mischräumen aufgegeben. Das bereits hinreichend homogenisierte Gemisch wird über weitere Förderelemente der Fördereinrichtung 200 in die Zementsiloanlage 300 eingeleitet.

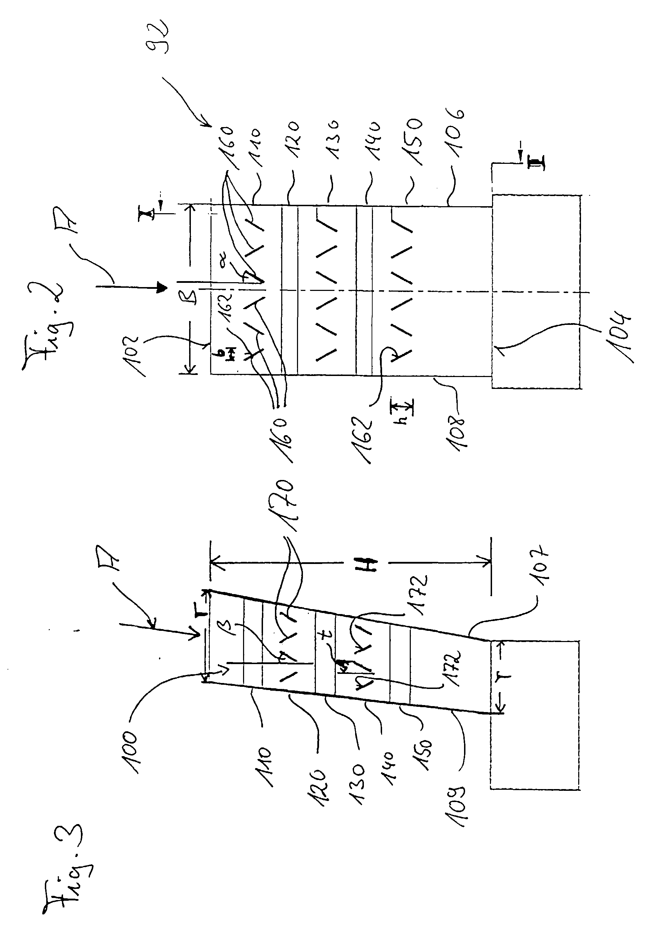

Nachstehend wird der Aufbau und die Funktion der in den Übergabeschurren 8O, 82 und 84 sowie den Abwurfschurren 92, 94 und 96 angeordneten Mischräume am Beispiel des in der Abwurfschurre 92 angeordneten Mischraums anhand der Fig. 2 bis 5 erläutert.

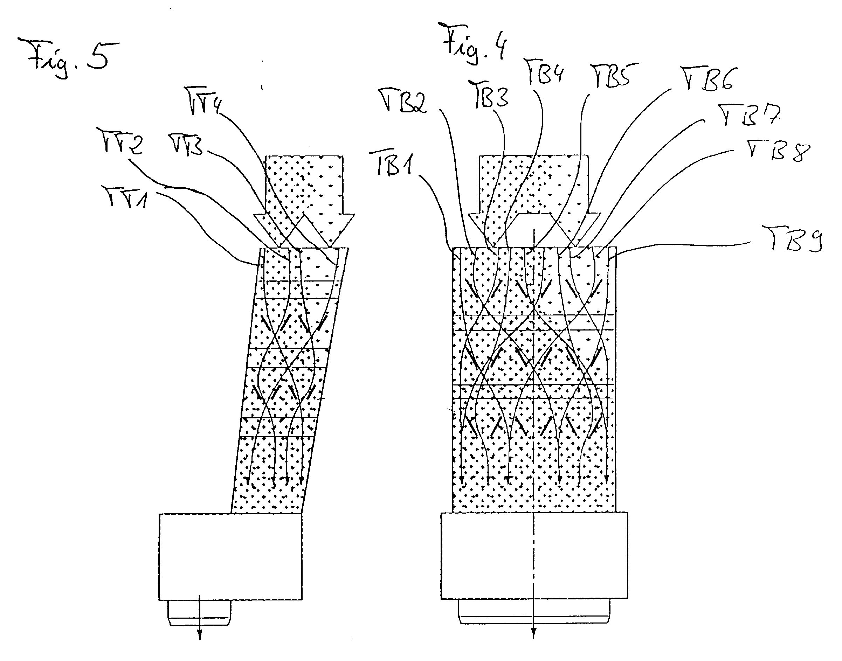

Nach den Fig. 2 und 3 weist die Übergabeschurre 92 einen im wesentlichen trichterförmigen Mischraum 1OO mit einer von der Beschickungsöffnung 1O2 bis zur Abgabeöffnung 1O4 gleichbleibenden Breite B von etwa 92O mm und einer sich von der Beschickungsöffnung 1O2 zur Abgabeöffnung 1O4 längs der durch den Pfeil A angedeuteten Durchlaufrichtung verringernden Tiefe T auf. Die Tiefe des Mischraums verringert sich von 5OO mm im Bereich der Beschickungsöffnung 1O2 auf 4OO mm im Bereich der Abgabeöffnung 1O4. Der Mischraum 1OO wird von dem aus dem Becherwerk 86 abgeworfenen Schüttgutstrom in der durch den Pfeil A angedeuten und im wesentlichen in Schwererichtung verlaufenden Durchlaufrichtung durchlaufen.

In dem Mischraum 1OO sind insgesamt 26 in Form von Leitblechen gebildete Ablenkelemente 16O und 17O feststehend montiert. Diese Ablenkelemente 16O und 17O sind in insgesamt fünf in Durchlaufrichtung des Schüttgutstroms hintereinander angeordneten Schichten 11O, 12O, 13O, 14O und 15O angebracht.

Die in den Schichten 11O, 13O und 15O angebrachten Ablenkelemente 16O erstrecken sich im wesentlichen in Tiefenrichtung des Mischraum 1OO. Dabei sind in jeder der Schichten 11O, 13O und 15O insgesamt sechs Ablenkelemente mit Abstand nebeneinander angeordnet. Jedes dieser Ablenkelemente weist eine einen spitzen Winkel α von etwa 3O° mit der Schwererichtung einschließende Ablenkfläche 162 auf. Jedes der zwischen zwei weiteren Ablenkelementen angeordnete Ablenkelement 16O bildet mit dem auf seiner einen Seite angeordneten Ablenkelement eine trichterförmige Struktur, in der der Abstand zwischen den jeweiligen Ablenkflächen 162 in Durchlaufrichtung abnimmt, und mit dem auf seiner anderen Seite angeordneten Ablenkelement 16O eine dachförmige Struktur, in der der Abstand zwischen den Ablenkflächen 162 in Durchlaufrichtung zunimmt. Der Abstand zwischen den in Breitenrichtung nebeneinander angeordneten Ablenkelementen 16O entspricht etwa der Abmessung b der einzelnen Ablenkelemente in Breitenrichtung. Dabei beträgt der Abstand zwischen den den Außenwänden 1O6 und 1O8 des Mischraums 1OO unmittelbar benachbarten Ablenkelementen 16O und den Außenwänden etwa 76 mm, während der Abstand zwischen den einzelnen Ablenkelementen etwa 8O mm beträgt.

Wie in Fig. 4 durch die Pfeile TB1 bis TB9 angedeutet, werden mit dieser Anordnung der in Form von Leitblechen gebildeten Ablenkelemente 16O Teilströme des durch die Beschickungsöffnung 1O2 in den Mischraum 1OO eingeleiteten und aus den Einzelkomponenten des hydraulischen Bindemittels bestehenden Schüttgutstroms zusammengeführt und voneinander getrennt, wodurch eine Mischung der Einzelkomponenten in Breitenrichtung bewirkt wird. In Fig. 4 ist der zerkleinerte Hüttensand durch kreuzförmige Symbole angedeutet, während das zerkleinerte Zementklinker-Gipsgemisch durch pfeilförmige Symbole angedeutet ist. Wie Fig. 4 zu entnehmen ist, bewirkt die gerade erläuterte Anordnung der Ablenkelemente 16O eine Homogenisierung des im Bereich der Beschickungsöffnung 1O2 noch in Breitenrichtung heterogenen Schüttgutstroms.

In den Schichten 12O und 14O des Mischraums 1OO sind jeweils vier sich im wesentlichen in Breitenrichtung des Mischraums erstreckende Ablenkelemente 17O in Form von Leitblechen feststehend montiert. Jedes dieser Ablenkelemente 17O weist eine einen spitzen Winkel von ebenfalls etwa 3O° mit der Schwererichtung einschließende Ablenkfläche 172 auf. Auch in den Schichten 12O und 14O bildet jedes der zwischen zwei weiteren Ablenkelementen 17O angeordneten Ablenkelemente 17O mit dem auf seiner einen Seite angeordneten Ablenkelement eine trichterförmige Struktur, bei der der Abstand zwischen den Ablenkflächen 172 in Durchlaufrichtung abnimmt, und mit dem auf seiner anderen Seite angeordneten Ablenkelement eine dachförmige Struktur, bei der der Abstand zwischen den Ablenkflächen in Durchlaufrichtung zunimmt. Auch der Abstand zwischen den in Tiefenrichtung nebeneinander angeordneten Ablenkelementen 17O entspricht im wesentlichen der Abmessung t dieser Ablenkelemente in Tiefenrichtung. Der Abstand zwischen dem oberen Rand der äußeren Ablenkelemente in der Schicht 12O und der benachbarten Begrenzungsfläche 1O7 bzw. 1O9 des Mischraums 1OO beträgt etwa 47,5 mm, während der Abstand zwischen den Ablenkelementen 17O in der Schicht 12O etwa 6O mm beträgt. Der Abstand zwischen den äußeren Ablenkelementen 17O in der Schicht 14O und den benachbarten Begrenzungsflächen 1O7 bzw. 1O9 des Mischraums 1OO beträgt etwa 44,5 mm, während der Abstand zwischen den einzelnen Ablenkelementen 17O in der Schicht 14O zwischen 5O und 6O mm beträgt. Durch diese Anordnung der Ablenkelemente 17O werden Teilströme des durch die Beschickungsöffnung 1O2 in den Mischraum 1OO gelangenderr Schüttgutstrom in Tiefenrichtung abgelenkt und es wird eine fortlaufende Trennung und Zusammenführung dieser Teilströme erreicht. Diese Ablenkung der Teilströme bewirkt eine Homogenisierung des im Bereich der Beschickungsöffnung 1O2 noch in Tiefenrichtung heterogene Schüttgutstroms, wie in Fig. 5 durch die Pfeile TT1 bis TT4 dargestellt.

Wie der vorstehenden Erläuterung bereits zu entnehmen ist, schließt die Projektion der Flächennormalen auf den Ablenkflächen 172 der Ablenkelemente 17O auf eine senkrecht zur Schwererichtung verlaufende Ebene mit den Flächennormalen auf den Ablenkflächen 162 der Ablenkelemente 16O auf dieselbe Ebene einen Winkel von etwa 9O° ein. Auf diese Weise wird erreicht, daß mit den in den zwischen den Schichten 11O, 13O und 15O angeordneten Schichten 12O und 14O montierten Ablenkelementen eine Ablenkung des Schüttgutstroms in einer senkrecht zur durch die Ablenkelemente 16O hervorgebrachten Ablenkungen verlaufenden Richtung erreicht wird. Der Abstand zwischen den in den Schichten 11O, 12O, 13O, 14O und 15O angeordneten Ablenkelementen in Durchlaufrichtung entspricht etwa der Abmessung h der einzelnen Ablenkelemente in Durchlaufrichtung. Dabei beträgt die Abmessung h der Ablenkelemente in Durchlaufrichtung in den Schichten 11O, 13O und 15O etwa 92,5 mm. Die Abmessung der in den Schichten 12O und 14O angeordneten Ablenkelemente in Durchlaufrichtung beträgt etwa 8O mm.

Mit der gerade beschriebenen Anordnung der Ablenkelemente 16O und 17O wird eine zufriedenstellende Homogenisierung des Schüttgutstroms ohne übermäßige Erhöhung des Strömungswiderstandes in dem Mischraum 1OO erreicht. Es hat sich gezeigt, daß dieses Ergebnis bei den genannten Abmessungen des Mischraums 1OO bei Massenströmen von 2O bis 3OO Tonnen pro Stunde und einer Materialgeschwindigkeit im Mischraum im Bereich von etwa einem bis sechs Metern pro Sekunde erreicht wird. Dabei wird die Fördergeschwindigkeit des Schüttgutes mit dem Becherwerk von etwa 1,8 Metern pro Sekunde am Becherwerksabwurf infolge der Abwurfparabel des Schüttgutes in eine vertikale und eine horizontale Komponente aufgeteilt. Daraus errechnet sich eine Einlaufgeschwindigkeit des Mischgutes in den Mischraum 1OO von etwa 1,2 bis 1,4 Metern pro Sekunde. Innerhalb des Mischers wird der Materialstrom im freien Fall weiter beschleunigt, so daß die Auslaufgeschwindigkeit an der Abgabeöffnung 1O4 bei einer Höhe H des Mischraums von 1,5 Metern etwa 6,5 Meter pro Sekunde beträgt.

Der Aufbau der Abwurfschurren 94 und 96 entspricht vollständig dem anhand der Fig. 2 bis 5 erläuterten Aufbau der Abwurfschurre 92. Auch die Übergabeschurren 8O, 82 und 84 sind ähnlich wie die Abwurfschurre 92 aufgebaut. In diesen Übergabeschurren 8O, 82, 84 sind die Ablenkelemente jedoch in nur drei Schichten angeordnet, wobei mit den in der mittleren Schicht angeordneten Ablenkelementen eine Ablenkung der Teilströme des Schüttgutstromes in einer senkrecht zu der durch die in den äußeren Schichten angeordneten Ablenkelemente bewirkten Ablenkrichtung verlaufenden Richtung hervorgebracht wird.

Mit der Anordnung der Mischräume in den Übergabeschurren 8O, 82 und 84 einerseits und den Abwurfschurren 92, 94 und 96 andererseits wird sichergestellt, daß das Schüttgut nacheinander zwei Mischräume durchläuft und dazwischen mit einem der Becherwerke 86, 88 und 9O gefördert wird. Die in den Mischräumen bewirkte Homogenisierung des Schüttgutes wird durch die vor und nach den Mischräumen angeordneten, beispielsweise in Form von Luftförderrinnen, Becherwerken und Schwingsieben, wie etwa den Schwingsieben 98a, 98b und 98c, Förderelemente gefördert. Die Mischwirkung einer erfindungsgemäßen Vorrichtung hängt neben der Konstruktion der Mischräume und Förderelemente auch noch von den Massenstromanteilen des gemahlenen Klinkers und Hüttensandes ab. Mit der gerade erläuterten Anordnung können Hüttensandzemente mit einem Massenanteil von 5 bis 95 % Hüttensandmehl unter Sicherstellung einer zufriedenstellenden Homogenität hergestellt werden.

Die Erfindung ist nicht auf das anhand der Zeichnung erläuterte Ausführungsbeispiel beschränkt. Vielmehr ist auch daran gedacht, daß der Schüttgutstrom nur einen oder mehr als zwei Mischräume durchläuft. Ferner kann jeder dieser Mischräume auch mehr oder weniger als 5 bzw. 3 Ablenkelementschichten aufweisen. Darüberhinaus können dem hydraulischen Bindemittel neben dem Sand, Zementklinker und Gips auch noch weitere Zumahlstoffe hinzugefügt werden. Bei der anhand der Zeichnung erläuterten Ausführungsform der Erfindung ist die Mischanlage vollständig in die Fördereinrichtung integriert. Daneben ist jedoch auch daran gedacht, die Mischanlage in Förderrichtung vor oder hinter der Fördereinrichtung anzuordnen.

## Patentansprüche

**1.** Verfahren zum Herstellen eines aus einer Mehrzahl von zerkleinerten Einzelkomponenten zusammengesetzten, hydraulischen Bindemittels, bei dem eine Anzahl der Einzelkomponenten in einer gemeinsamen Mahleinrichtung zerkleinert und danach mit mindestens einer weiteren, getrennt davon zerkleinerten Einzelkomponente zusammengeführt wird, dadurch gekennzeichnet, daß die Zusammenführung unmittelbar nach der Zerkleinerung der Anzahl der Einzelkomponenten ohne vorherige Zwischenlagerung dieser zerkleinerten Einzelkomponenten erfolgt.

**2.** Verfahren nach Anspruch 1, dadurch gekennzeichnet, daß mindestens zwei Einzelkomponenten aus der Anzahl der Einzelkomponenten zur Zerkleinerung aus mindestens zwei zur getrennten Lagerung dieser Einzelkomponenten dienenden Silos abgezogen und in die gemeinsame Mahleinrichtung eingeleitet werden.

**3.** Verfahren nach Anspruch 2, dadurch gekennzeichnet, daß die Mengen der pro Zeit aus den Silos abgezogenen Einzelkomponenten getrennt voneinander in Abhängigkeit von einer vorgegebenen Zusammensetzung des hydraulischen Bindemittels gesteuert werden.

**4.** Verfahren nach einem der vorhergehenden Ansprüche, dadurch gekennzeichnet, daß die Betriebsparameter der gemeinsamen Mahleinrichtung, wie etwa der Durchsatz pro Zeit, die Feinheit und Kornverteilung der damit zerkleinerten Einzelkomponenten u. dgl. in Abhängigkeit von einer vorgegebenen Zusammensetzung, Feinheit und/oder Kornverteilung des hydraulischen Bindemittels gesteuert werden.

**5.** Verfahren nach einem der vorhergehenden Ansprüche, dadurch gekennzeichnet, daß die in der gemeinsamen Mahleinrichtung zerkleinerten Einzelkomponenten mindestens aus Zementklinker und Gips bestehen.

**6.** Verfahren nach einem der vorhergehenden Ansprüche, dadurch gekennzeichnet, daß die weitere Einzelkomponente in einer weiteren Mahleinrichtung zerkleinert wird.

**7.** Verfahren nach Anspruch 6, dadurch gekennzeichnet, daß die weitere Einzelkomponente nach der Zerkleinerung in einem Vorratsbehälter gelagert und zur Zusammenführung aus dem Vorratsbehälter abgezogen wird.

**8.** Verfahren nach Anspruch 6 oder 7, dadurch gekennzeichnet, daß die Menge der pro Zeit aus dem Vorratsbehälter abgezogenen weiteren Einzelkomponenten und/oder die Betriebsparameter der weiteren Mahleinrichtung in Abhängigkeit von einer vorgegebenen Zusammensetzung, Feinheit und/oder Kornverteilung des hydraulischen Bindemittels gesteuert werden.

**9.** Verfahren nach einem der vorhergehenden Ansprüche, dadurch gekennzeichnet, daß die weitere Einzelkomponente mindestens aus Hüttensand besteht.

**10.** Verfahren nach einem der vorhergehenden Ansprüche, dadurch gekennzeichnet, daß die zerkleinerten Einzelkomponenten nach der Zusammenführung zur Erzeugung einer homogenen Bindemittelzusammensetzung miteinander vermischt werden.

**11.** Verfahren nach einem der vorhergehenden Ansprüche, dadurch gekennzeichnet, daß die zerkleinerten Einzelkomponenten nach der Zusammenführung längs einer vorgegebenen Förderstrecke zu einer Fertiggutsiloanlage gefördert werden.

**12.** Verfahren nach den Ansprüchen 1O und 11, dadurch gekennzeichnet, daß die Mischung im Verlauf der vorgegebenen Förderstrecke erfolgt.

**13.** Verfahren nach Anspruch 11 oder 12, dadurch gekennzeichnet, daß die vorgegebene Förderstrecke in Abhängigkeit von der Bindemittelzusammensetzung gewählt wird.

**14.** Verfahren zum Herstellen eines aus einer Mehrzahl von zerkleinerten Einzelkomponenten bestehenden hydraulischen Bindemittels, insbesondere nach einem der vorhergehenden Ansprüche, bei dem ein aus den zerkleinerten Einzelkomponenten bestehender Schüttgutstrom einen Mischraum einer Mischanlage in einer Durchlaufrichtung durchläuft, dadurch gekennzeichnet, daß in dem Mischraum ein Teilstrom des Schüttgutstroms an einem stationären Ablenkelement quer zur Durchlaufrichtung abgelenkt wird.

**15.** Verfahren nach Anspruch 14, dadurch gekennzeichnet, daß der Schüttgutstrom den Mischraum mit einem Massenstrom von etwa 2O bis 3OO Tonne pro Stunde durchläuft.

**16.** Verfahren nach Anspruch 15, dadurch gekennzeichnet, daß der Schüttgutstrom den Mischraum mit einem Massenstrom pro Fläche von etwa 15 bis 85O Tonnen pro Stunde und Quadratmeter durchläuft.

**18.** Vorrichtung zur Durchführung eines Verfahrens nach einem der vorhergehenden Ansprüche mit einer zum Erzeugen einer homogenen Mischung der Einzelkomponenten betreibbaren und mindestens einen in einer Durchlaufrichtung (A) von einem aus den Einzelkomponenten bestehenden Schüttgutstrom durchlaufenen Mischraum (1OO) sowie ein in dem Mischraum (1OO) angeordnetes Mischwerkzeug aufweisenden Mischanlage, dadurch gekennzeichnet, daß das Mischwerkzeug mindestens ein stationäres und zum Ablenken eines Teilstroms (TB1 bis TB9; TT1 bis TT4) des Schüttgutstroms quer zur Durchlaufrichtung (A) dienendes Ablenkelement (16O, 17O) aufweist.

**19.** Vorrichtung nach Anspruch 18, dadurch gekennzeichnet, daß das Ablenkelement mindestens eine einen spitzen Winkel von vorzugsweise etwa 15 bis 45° mit der Durchlaufrichtung (A) einschließende im wesentlichen ebene Ablenkfläche (162, 172) aufweist.

**20.** Vorrichtung nach Anspruch 18 oder 19, dadurch gekennzeichnet, daß das Mischwerkzeug zum Ablenken jeweiliger Teilsröme (TB1 bis TB9; TT1 bis TT4) des Schüttstroms ausgelegte Ablenkelemente (16O, 17O) aufweist.

**21.** Vorrichtung nach Anspruch 2O, dadurch gekennzeichnet, daß mindestens zwei Ablenkelemente (16O, 17O) in einer sich etwa senkrecht zur Durchlaufrichtung (A) erstreckenden Schicht des Mischraums (1OO) nebeneinander angeordnet sind.

**22.** Vorrichtung nach Anspruch 21, dadurch gekennzeichnet, daß die Ablenkflächen (162, 172) von zwei nebeneinander angeordneten Ablenkelementen (16O, 17O) nach Art eines Daches und/oder Trichters etwa spiegelsymmetrisch bezüglich einer parallel zur Durchlaufrichtung (A) verlaufenden Ebene angeordnet sind.

**23.** Vorrichtung nach Anspruch 21 oder 22, dadurch gekennzeichnet, daß der Abstand zwischen den nebeneinander angeordneten Ablenkelementen (16O, 17O) etwa der Abmessung (b, t) der Ablenkelemente (16O, 17O) in einer senkrecht zur Durchlaufrichtung verlaufenden Richtung entspricht.

**24.** Vorrichtung nach einem der Ansprüche 2O bis 23, dadurch gekennzeichnet, daß mindestens zwei Ablenkelemente (16O, 17O) in zwei in Durchlaufrichtung (A) hintereinander angeordneten Schichten (11O, 12O, 13O, 14O, 15O) des Mischraums (1OO) angeordnet sind.

**25.** Vorrichtung nach Anspruch 24, dadurch gekennzeichnet, daß die Projektionen der Flächennormalen auf den Ablenkflächen (162, 172) von zwei hintereinander angeordneten Ablenkelementen (16O, 17O) auf eine senkrecht zur Durchlaufrichtung verlaufende Ebene einen Winkel von etwa 9O° miteinander einschließen.

**26.** Vorrichtung nach Anspruch 24 oder 25, dadurch gekennzeichnet, daß der Abstand zwischen den hintereinander angeordneten Ablenkelementen (16O, 17O) etwa der Abmessung (h) der Ablenkelemente (16O, 17O) in Durchlaufrichtung (A) entspricht.

**27.** Vorrichtung nach einem der Ansprüche 18 bis 26, dadurch gekennzeichnet, daß mindestens eines der Ablenkelemente (16O, 17O) in Form eines Leitblechs gebildet ist.

**28.** Vorrichtung nach einem der Ansprüche 18 bis 27, dadurch gekennzeichnet, daß die Querschnittsfläche des Mischraums (1OO) in Durchlaufrichtung (A) zumindest abschnittsweise nach Art eines Trichters geringer wird.

**29.** Vorrichtung nach einem der Ansprüche 18 bis 28, dadurch gekennzeichnet, daß die Mischanlage mindestens zwei nacheinander von dem Schüttgutstrom durchlaufene Mischräume aufweist, von denen jeder mindestens ein darin feststehend angeordnetes und zum Ablenken eines Teilstroms des Schüttgutstroms quer zur Durchlaufrichtung dienendes Ablenkelement aufweist.

**30.** Vorrichtung nach einem der Ansprüche 18 bis 29, gekennzeichnet durch eine zum Zerkleinern der Einzelkomponenten des hydraulischen Bindemittels betreibbare Mahlanlage (1O).

**31.** Vorrichtung nach Anspruch 3O, dadurch gekennzeichnet, daß die Mahlanlage (1O) mindestens zwei Mahleinrichtungen (2O, 5O) aufweist, mit denen die Einzelkomponenten getrennt voneinander zerkleinert werden können.

**32.** Vorrichtung nach Anspruch 31, dadurch gekennzeichnet, daß eine erste der Mahleinrichtungen (2OL) zum Zerkleinern von Hüttensand ausgelegt ist und eine zweite der Mahleinrichtungen (5O) zum Zerkleinern eines Zementklinker-Gips-Gemisches ausgelegt ist.

**33.** Vorrichtung nach Anspruch 32, dadurch gekennzeichnet, daß der ersten Mahleinrichtung mindestens ein Vorratsbehälter (42) zum Lagern des zerkleinerten Hüttensandes zugeordnet ist.

**34.** Vorrichtung nach Anspruch 33, dadurch gekennzeichnet, daß dem Vorratsbehälter (42) eine Abzugeinrichtung zugeordnet ist, mit der der zerkleinerte Hüttensand aus dem Vorratsbehälter abgezogen und mit dem zerkleinerten Zementklinker-Gips-Gemisch zu dem Schüttgutstrom zusammengeführt werden kann.

**35.** Vorrichtung nach Anspruch 34, dadurch gekennzeichnet, daß die Abzugeinrichtung mindestens ein zum Festlegen der pro Zeit aus dem Vorratsbehälter (42) abgezogenen Menge des zerkleinerten Hüttensandes betreibbares Dosierelement (44) aufweist.

**36.** Vorrichtung nach einem der Ansprüche 18 bis 35, gekennzeichnet durch eine Fördereinrichtung (2OO) mit der die zerkleinerten Einzelkomponenten längs einer vorgegebenen Förderstrecke zu einer Zementsiloanlage (3OO) förderbar sind.

**37.** Vorrichtung nach Anspruch 36, dadurch gekennzeichnet, daß die zerkleinerten Einzelkomponenten im Verlauf der vorgegebenen Förderstrecke die Mischanlage durchlaufen.

**38.** Vorrichtung nach Anspruch 37, dadurch gekennzeichnet, daß die Fördereinrichtung mindestens ein Becherwerk (28, 32, 4O, 58, 74, 76, 86, 88, 9O) aufweist.

**39.** Vorrichtung nach Anspruch 38, dadurch gekennzeichnet, daß einer der Mischräume der Mischanlage in einer zum Beschicken des Becherwerkes (86, 88, 9O) mit den zerkleinerten Einzelkomponenten dienenden Übergabeschurre (8O, 82, 84) angeordnet ist.

**40.** Vorrichtung nach Anspruch 38 oder 39, dadurch gekennzeichnet, daß einer der Mischräume (1OO) der Mischanlage in einer zum Weiterleiten der aus dem Becherwerk abgeworfenen Einzelkomponenten dienenden Abwurfschurre (92, 94, 96) angeordnet ist.

**41.** Vorrichtung nach Anspruch 4O, dadurch gekennzeichnet, daß die Fördereinrichtung (2OO) ein Schwingsieb (98a, 98b, 98c) aufweist, dem die zerkleinerten Einzelkomponenten mit der Abwurfschurre (92, 94, 96) aufgegeben werden.

**42.** Vorrichtung nach einem der Ansprüche 17 bis 41, dadurch gekennzeichnet, daß die Durchlaufrichtung (A) mindestens eines der Mischräume (1OO) im wesentlichen in Schwererichtung verläuft.

**43.** Mischanlage für eine Vorrichtung nach einem der Ansprüche 18 bis 41.
